# FASCICULE DE BREVET EUROPEEN

(11) **EP 3 049 762 B1**
(45) Date de publication et mention de la délivrance du brevet: **20.02.2019**
(21) Numéro de dépôt: 14799389.3
(22) Date de dépôt: 12.11.2014
(51) Int. Cl.: B63B 9/00, G01C 21/20, G01P 5/00, B63J 99/00

(54) **PROCÉDÉ DE CALCUL DE LA VITESSE SURFACE D'AU MOINS UN NAVIRE ET PROCÉDÉ DE DÉDUCTION DE CHAQUE VECTEUR DÉRIVE EN TOUT POINT DE LA TRAJECTOIRE DUDIT NAVIRE**
VERFAHREN ZUR BERECHNUNG DES OBERFLÄCHEN VEKTORS EINES SCHIFFES UND VERFAHREN ZUR BESTIMMUNG DES DRIFT VEKTORS DES SCHIFFES AN JEDEM PUNKT SEINES VERLAUFS.
METHOD FOR CALCULATING THE SURFACE VECTOR OF AT LEAST ONE SHIP AND METHOD FOR ESTIMATING ITS DRIFT VECTOR ON EACH POINT OF ITS TRAJECTORY

(43) Date de publication de la demande: 03.08.2016
(73) Titulaire: E-Odyn, 29280 Plouzane (FR)
(72) Inventeur: GUICHOUX, Yann, 29290 Saint-Renan (FR)
(74) Mandataire: Ipside
(86) Numéro de dépôt international: PCT/EP2014/074327
(87) Numéro de publication internationale: WO 2015/071286

(56) Documents cités:
- WO-A1-2008/096376
- KR-A- 20130 104 860
- US-A1- 2012 259 489

## Description

### Domaine technique et état de l'art

La présente invention se rapporte à un procédé de mesure de la vitesse surface d'un navire et de mesure de courant et de vent à partir de l'analyse de la dérive dudit navire.

Il existe plusieurs solutions connues pour mesurer la vitesse surface d'un navire.

Une première solution consiste à effectuer des tests de navigation avant la mise en service opérationnel du navire. Ces tests consistent à mesurer la vitesse fond du navire sur un trajet aller/retour donné dans un intervalle de temps de courte durée, intervalle durant lequel les conditions de courant et de vent sont considérées comme suffisamment stables. Ce trajet aller/retour effectué sur une même route de navigation permet d'annuler la dérive du navire liée au courant et au vent. Dans ce cas la vitesse fond moyenne sur le trajet aller/retour peut être assimilée à la vitesse surface. Ce type d'opération peut être répété plusieurs fois dans différentes conditions de navigations (régimes de propulsion). La répétition de ce type d'opération permet d'établir une table de correspondance entre régime moteur et vitesse surface qui peut être utilisée par le personnel de bord pour estimer la vitesse surface du navire en conditions normales de navigation. Cette solution donne cependant des valeurs de vitesse surface approximatives en condition de navigations réelles, et nécessite d'obtenir des informations sur le régime moteur du navire, par le biais d'un capteur embarqué spécifique. Cette méthode ne peut par exemple être utilisée par un service à terre pour mesurer simultanément la vitesse surface d'un grand nombre de navires en opérations (avec une charge variable en fonction des trajets) évoluant dans une zone donnée, navires dont le service considéré ne connaît avec précision, ni les conditions de chargement, ni le régime moteur desdits navires.

Une autre solution consiste à utiliser un capteur de vitesse embarqué, spécifiquement pour mesurer la vitesse relative du navire par rapport à la surface de l'eau. Ce type de capteur est communément appelé loch, et fournit généralement une information sur une seule composante du vecteur surface (la composante longitudinale correspondant à la projection du vecteur vitesse sur l'axe du navire). La vitesse surface mesurée à l'aide d'un loch est disponible à bord du navire et un service à terre en charge de la surveillance du trafic maritime par exemple ne dispose pas de cette information. Elle peut dans certains cas lui être communiquée par le navire à l'aide d'un moyen de transmission radio, mais ne peut être mesurée directement à terre à partir des informations communément acquises par ce type de service de surveillance.

Il existe également plusieurs solutions connues pour mesurer des paramètres environnementaux tels que le courant marin de surface et le vent.

Paramètre courant marin de surface :
Les bouées dérivantes sont une solution de mesure de ce paramètre. Ces bouées dérivantes sont utilisées pour suivre le déplacement d'une masse d'eau (dérive lagrangienne) et mesurer le courant de surface. Elles transmettent périodiquement leur position par des moyens de télécommunication satellitaires. L'inconvénient de ces équipements est qu'ils sont peu adaptés à la zone côtière du fait notamment de la forte densité de trafic maritime et des risques d'échouements des équipements. De plus, les données sont disponibles en temps différé et les coûts d'acquisition du matériel et de déploiement sont élevés.

Une autre solution consiste à utiliser des radars HF ou VHF (High Frequency pour haute fréquence ou Very High Frequency pour très haute fréquence) qui permettent d'effectuer des mesures de courant de surface sur des zones côtières en temps quasi-réel. Les échos reçus en retour des radars sont multiples et très variés en réponse aux innombrables types de vagues qui agitent la surface de la mer. Il est connu d'arriver à les différencier et à identifier les vagues dont la longueur d'onde est égale à la moitié de celles émises par le radar. La vitesse de propagation théorique de ces vagues en l'absence de courant de surface étant parfaitement connue, il est alors possible d'en déduire par différence (décalage doppler) avec la vitesse mesurée, la vitesse du courant. Cependant, il est nécessaire d'avoir deux radars balayant une même zone pour reconstruire le vecteur du courant (intensité et direction) à partir des composantes radiales mesurées par les deux radars en un même point. Les mesures communes des deux radars permettent alors de dresser la carte des courants de surface. La superficie des zones de mesure reste assez réduite et la résolution spatiale des mesures est faible (de l'ordre de 25 km2), notamment lorsque la distance de mesure est éloignée du radar. Les radars HF permettent d'effectuer des mesures jusqu'à une distance de 200 km de la côte. Ces équipements sont très onéreux.

Une autre solution est la mesure à partir de plateformes satellitaires. On peut mesurer le courant de surface à l'aide d'images radar satellitaire (appelées images SAR pour Synthetique Aperture Radar). Cette solution permet d'obtenir des mesures radiales du courant sur de vastes étendues mais à faible résolution. Il est également possible d'utiliser un altimètre installé sur un satellite et mesurer le courant de surface en interprétant les différences de niveau de la surface des océans (hypothèse géostrophique). Cette méthode est cependant limitée, du fait du faible nombre d'altimètres satellitaires disponibles pour fournir une couverture spatiale et temporelle la plus régulière possible et également du fait que les mesures de courant concernent les mouvements grandes échelles de la totalité de la colonne d'eau et non directement le courant de surface. Il est également possible d'estimer le courant de surface en utilisant des mesures satellitaires de températures de surface des océans ou de couleur de l'eau (moyens optiques). Ces méthodes sont peu efficaces en présence de nuages et ne rendent pas à l'heure actuelle compte de manière satisfaisante de la dynamique de surface réelle. De manière générale, les mesures effectuées à l'aide de satellites sont transmises avec un délai dépendant des systèmes de télécommunication utilisés entre l'espace et la terre et les mesures réalisées sont moins précises que celles réalisées à l'aide d'un radar côtier haute fréquence par exemple.

Une autre solution consiste à utiliser un courantomètre destiné à mesurer la vitesse d'écoulement de l'eau à une position fixe (mesure eulérienne du courant). Cette mesure peut être effectuée à l'aide de courantomètres mécaniques installés sur une bouée ou de courantomètres ADCP (Acoustic Doppler Current Profiler). Les mesures réalisées à l'aide de ce type d'instrument sont localisées (pas de mesure sur de grandes zones géographiques possibles) et la maintenance des instruments déployés en mer est coûteuse.

Une autre solution consiste à équiper des navires d'un courantomètre à effet Doppler, souvent dénommé par son abréviation anglophone VM-ADCP Vessel Mounted ADCP. Le courantomètre à effet Doppler équipé sur un navire est un appareil capable d'enregistrer un profil des vitesses et directions du courant. Ces données peuvent être transmises en temps quasi-réel, si le navire effectuant les mesures est équipé de moyens de télécommunications adaptés. Cependant, peu de navires sont équipés de ce type d'instrument de mesure onéreux et difficile à étalonner. Ces navires ne permettent donc pas d'obtenir des mesures continues sur de vastes zones maritimes.

Une autre solution connue, consiste à exploiter les paramètres de navigation d'un navire (vitesse fond, cap, vitesse surface) pour déduire une information sur les courants marin en analysant la dérive du navire. Cette technique est communément appelée navigation à l'estime et est utilisée pour estimer de manière grossière le courant de surface. La position, le cap et la vitesse fond du navire sont mesurés à un instant donné. Une seconde mesure des mêmes paramètres est effectuée à un autre instant, classiquement quelques heures après. Ces deux relèvements de paramètres de navigation effectués à des instants différents permettent d'estimer le courant de surface (ou courant de dérive). Un navire naviguant dans une zone sans courant de surface arrivera à un instant donné à une position prévue à l'avance. En présence de courant, le navire aura dévié de sa route et ne sera pas à la position prévue. Il est alors possible d'obtenir une estimation du courant de dérive en sommant vectoriellement la route estimée sur la base de paramètres de navigation mesurés à un instant donné et la route réelle suivie par le navire. Cependant, cette technique ne permet pas d'effectuer une mesure précise et en temps réel du courant de surface puisqu'elle nécessite notamment une connaissance a posteriori de la route réellement suivie par le navire.

Paramètre vent marin :
La mesure du vent à la surface des océans peut être effectuée par des moyens analogues à ceux décrits pour la mesure du courant de surface. Une solution consiste à utiliser un anémomètre et une girouette installée sur une bouée. Une autre solution consiste à utiliser des mesures radar, qui peuvent être terrestres ou satellitaires (mesure du vent par diffusiométrie ou imagerie SAR). Ces solutions souffrent des mêmes inconvénients que ceux évoqués pour la mesure du courant, à savoir des coûts de mise en oeuvre et de maintenance élevés, de faibles couvertures spatiales lorsque la solution permet une mesure à haute résolution spatiale et temporelle (cas des mesures de vent à des points fixes), et inversement une large couverture spatiale mais avec une faible résolution spatiale et temporelle (cas des moyens satellitaires).

Plus généralement, l'exploitation de paramètres environnementaux tels que le vent et le courant pour optimiser la route d'un navire est largement répandue. Le document KR 2013/0104860 décrit un procédé de de contrôle de trajet d'un navire, utilisant des informations fixes, qui contiennent des données de chargement du navire, des données de marée, et des informations variables, qui contiennent des données de position du navire, des données de météorologie. Ces informations permettent de calculer une pluralité de points secondaires où le navire peut atteindre sa vitesse de croisière dans un temps donné, ce qui permet de déterminer un trajet optimal. Le document US2012/0259489 décrit par exemple un système de pilotage automatique d'un navire permettant d'optimiser sa route en prenant en compte des paramètres environnementaux tels que le vent et le courant mesurés à l'aide de capteurs installés à bord du navire. Le système d'optimisation présenté consiste à adapter la vitesse surface du navire (i.e son régime moteur) afin de suivre une route fond planifiée (i.e imposée, et non réelle). Le système décrit nécessite d'effectuer des mesures de paramètres environnementaux tels que le vent et le courant à la position du navire à l'aide de capteurs spécifiquement installés à bord. Il nécessite également de connaître la vitesse surface du navire, déterminée à l'aide d'un autre capteur embarqué dédié à cet effet et directement raccordé au bloc moteur. Le document EP 0319395 décrit également un système de contrôle ou d'aide à la navigation maritime exploitant des données environnementales telles que le vent et le courant. Tout comme pour le système précédemment cité, ce document décrit un système nécessitant l'installation à bord du navire d'un capteur de vitesse pour mesurer la vitesse surface du navire, mesure de vitesse pouvant être mise à profit pour en déduire une mesure du courant de dérive.

Ces deux derniers documents mentionnent également l'utilisation de base de données statistiques (tels que des atlas de courant) ou de modèles de prévisions, données par nature différentes de mesures réelles. Ces données n'ont pas la précision requise pour déterminer la vitesse surface réelle du navire considéré à un instant donné ou le courant de dérive réel à proximité, raison pour laquelle ces documents décrivent également l'utilisation de mesures réalisées à l'aide de capteurs embarqués en complément pour pallier à cette difficulté.

Le but de la présente invention est de pallier à ces inconvénients et de proposer un procédé permettant de calculer la vitesse surface d'un navire et de mesurer les courants marins de surface et le vent tout en étant simple à mettre en oeuvre.

### Description de l'invention

L'invention propose un procédé de calcul du vecteur surface d'au moins un navire et de calcul de chaque vecteur dérive en tout point de la trajectoire dudit navire, conformément aux revendications indépendantes 1 et 9. L'invention propose également un produit de programme d'ordinateur conformément à la revendication indépendante 12.

Un Système d'Identification Automatique, dénommé ci-après AIS (Automatic Identification System) et spécifié dans le document UIT 1371.1 et ses versions successives, est un système de télécommunication VHF ; le VDES (VHF Data Exchange System) en cours de développement dans les organisations de normalisation internationales, adossé à l'AIS, est considéré dans le procédé comme faisant partie du système AIS. L'AIS permet l'échange d'informations automatisé entre navires, comme par exemple l'identité, la position, le cap, la vitesse, la cargaison... Des stations AIS côtières sont déployées sur le littoral permettant de réguler ces transmissions automatisées et de collecter les informations transmises par les navires situés en portée VHF de ces équipements. De nombreux pays à travers le monde disposent de réseaux AIS et reçoivent en temps réel des informations sur la trajectoire des navires. D'autres systèmes de collecte de données et de localisation existent comme par exemple les radars côtiers et satellitaires, le LRIT (Long Range Identification and Tracking), le VMS (Vessel Monitoring System). Ces systèmes utilisent des moyens de télécommunications satellitaires tels que Inmarsat (nom de la société : International maritime satellite organization), Iridium (nom de la société désignant un système global de télécommunication) ou Argos (système mondial de localisation et de collecte de données géopositionnées par satellite) pour transmettre des informations de trajectoire des navires.

L'invention propose un procédé de calcul du vecteur surface d'au moins un navire évoluant au moteur en régime de croisière, caractérisé en ce qu'il comprend les étapes suivantes en une position déterminée dudit navire :
a) obtenir des paramètres dudit navire dont la position, le cap, la vitesse fond, la route fond ;
b) obtenir des mesures sélectionnées parmi le vent et le courant, à l'aide de moyens externes audit navire, lesdites mesures étant effectuées à proximité dudit navire ;
c) définir le vecteur dérive à partir d'une ou des mesures obtenues à l'étape b) sélectionnées parmi le vent et le courant ;
d) définir le vecteur fond à partir des paramètres sélectionnés parmi la position, la vitesse fond et la route fond obtenus à l'étape a) ;
e) calculer l'intensité et la direction du vecteur surface du navire.

On entend par mesure une grandeur physique observée dans un milieu donné et obtenue à l'aide d'un capteur. Une mesure de courant de surface à un instant et à une position donnée correspond par exemple à une valeur du courant réellement observée et acquise à l'aide d'un instrument de mesure.

On entend par les données provenant d'une base de données, toutes données issues de mesures, traitées ou non.

On entend par navire, un navire évoluant à l'aide d'un moteur.

On entend par position d'un navire, sa position géographique à un instant donné.

On entend par proximité d'un navire, la proximité spatiale et temporelle. La proximité spatiale peut être définie par une zone centrée sur la position dudit navire et de rayon inférieur ou égal à 2km, ou encore inférieur ou égal à 10km. On peut également considérer dans certains cas une zone plus étendue autour du navire, par exemple ayant un rayon de plusieurs dizaines de kilomètres, typiquement une cinquantaine de kilomètres. La proximité temporelle est définie par un intervalle de temps de deux heures centré sur un instant donné. On peut également considérer dans certains cas, un intervalle de temps plus étendu, typiquement de 7 heures. Par exemple, on entend par collecte d'un paramètre comme le vent à proximité d'un navire, la collecte du vent dans une zone géographique centrée sur la position du navire à un instant donné et pouvant être effectuée jusqu'à une heure avant que le navire ne passe par cette position géographique et jusqu'à une heure après.

On entend par moyens externes, tous moyens de télédétection tels que des systèmes radar ou optique ou de téléréception tels que l'AIS, Iridium, Inmarsat ou Argos par exemple non embarqués à bord d'un navire et permettant de collecter au moins un paramètre dudit navire tel que la position, le cap, la vitesse fond, la route fond ainsi que le vent et le courant à proximité.

On entend par vitesse de croisière, la vitesse d'un navire correspondant à un régime des moteurs constant pendant une ou plusieurs phase du trajet entre la sortie du port de départ et l'entrée dans le port d'arrivée. Cette vitesse de croisière ne comprend pas les phases d'accélération et de décélération lors de la sortie du port de départ et à l'arrivée du port de destination. Le trajet d'un navire entre son port de départ et son port d'arrivée peut comporter plusieurs phases de navigation durant lesquelles les régimes moteurs diffèrent. Dans le cadre de la présente invention, le navire est considéré durant toutes ces phases comme évoluant en vitesse de croisière.

On entend par cap du navire, la direction où pointe son étrave ou encore l'angle formé par le Nord et la direction pointée par son étrave.

On entend par vecteur surface, le vecteur vitesse dont la direction est donnée par le cap du navire et dont la norme correspond à la valeur de la vitesse de déplacement du navire dans un référentiel lié à la surface de l'eau.

On entend par vitesse surface, la norme du vecteur surface.

On entend par vecteur dérive, le vecteur vitesse résultant de l'action du vent et du courant sur le navire et sa cargaison. On peut dans certains cas considérer également l'action de la houle.

On entend par vecteur fond, le vecteur vitesse dont la direction est donnée par la direction de déplacement du navire et dont la norme correspond à la valeur de la vitesse de déplacement du navire dans un référentiel lié au fond marin.

On entend par route fond, l'angle entre la direction suivie par le navire soumis à la dérive due au vent ou au courant et le Nord.

On entend par vitesse fond, la norme du vecteur fond.

On entend par courant, une valeur du courant caractérisée par son intensité et sa direction à une profondeur comprise entre 0 et 20 mètre(s). On peut également considérer dans certains cas une profondeur comprise entre 0 et 40 mètre(s) ou encore entre 0 et 200 mètre(s).

On entend par vent, une valeur du vent caractérisée par son intensité et sa direction à une altitude comprise en 0 et 10 mètre(s). On peut également considérer dans certains cas une altitude comprise entre 0 et 30 mètre(s) ou encore entre 0 et 100 mètre(s).

Les avantages du procédé permettent de :
- calculer la vitesse surface dudit navire en régime de croisière à l'aide de moyens externes audit navire, c'est-à-dire sans que cette vitesse ne soit mesurée directement par un instrument spécialisé embarqué à bord dudit navire (loch ou capteur connecté au moteur par exemple);
- calculer la vitesse surface dudit navire en régime de croisière à l'aide de moyens externes audit navire, en exploitant des mesures de courant et de vent collectées à proximité dudit navire à l'aide de moyens externes, c'est à dire sans utiliser d'instruments spécialisés embarqués à bord du navire par exemple (VM-ADCP ou anémomètre par exemple) ;
- mesurer et collecter à terre ou à bord d'un autre navire la vitesse surface dudit navire sur la seule base d'informations de navigations collectées à l'aide de moyen de télédétection tel qu'un radar ou de télé-réception tel que l'AIS par exemple, et ceci quelques soient les conditions de navigation dudit navire (conditions de charge et régime moteur par exemple) ;
- d'exploiter des infrastructures existantes de surveillance du trafic maritime pour mesurer la vitesse surface de nombreux navires simultanément, et ceci quelque-soit la charge des navires considérés ;
- de palier à un problème connu de longue date mais non résolu à ce jour : calculer en conditions opérationnelles et simultanément la vitesse surface d'une multitude de navires évoluant sur de vastes étendues. Il est par ailleurs remarquable que des moyens existant depuis de très nombreuses années, comme les moyens externes de mesure de paramètres environnementaux (par exemple : le vent et le courant) et des moyens de collectes de paramètres de navigation (par exemple : l'AIS), sont utilisées pour calculer la vitesse surface de plusieurs navires sans nécessiter d'exploiter spécifiquement des moyens de mesure de vitesse de déplacement sur lesdits navires.

Dans un mode de réalisation, les paramètres de l'étape a) ou les mesures de l'étape b) sont acquis en temps réel.

On entend par temps-réel, le fait que les valeurs des paramètres sont transmises ou collectées au moyen de traitement sans attendre la fin de la campagne de mesure. Par exemple, les paramètres mesurés à l'aide de capteurs installés sur les navires et transmis par AIS sont émis en temps réel. Des mesures de paramètres effectuées à partir d'un radar côtier et transmises à un moyen de traitement sont également considérées comme réalisées en temps-réel. La collecte de paramètres par un moyen satellitaire qui doit survoler une station au sol avant de transmettre ses mesures est également considérée comme réalisée en temp-réel.

Dans un mode de réalisation, les paramètres de l'étape a) ou les mesures de l'étape b) sont acquises en temps différé.

On entend par temps différé le fait que les valeurs des paramètres ne sont pas transmises en temps-réel. Des données stockées dans un fichier et traitées au terme d'une campagne de mesure sont par exemple considérées comme des données accessibles en temps-différé.

Dans un mode de réalisation, l'obtention des paramètres de l'étape a), s'effectue pendant un intervalle de temps d'au moins deux secondes.

L'application du procédé pendant une durée d'au moins deux secondes, permet de collecter plusieurs informations de position, de cap, de vitesse fond et de route fond pour un même navire lorsque ces données sont transmises par AIS. Il est alors possible d'appliquer le procédé en plusieurs positions du navire tout en utilisant les mêmes données environnementales collectées à l'étape b). Les multiples valeurs du vecteur surface obtenues peuvent par exemple être moyennées pour consolider le calcul du vecteur surface.

Dans le cas d'une zone côtière avec une marée, il est préférable d'obtenir des paramètres pendant au moins un demi-cycle de marée. L'obtention des paramètres permet de se passer de paramètres environnementaux pour calculer la vitesse surface en régime de croisière, soit :
- en faisant un calcul statistique sur un grand nombre de valeurs de vitesse fond de manière à annuler « en moyenne » la dérive et considérer alors que la vitesse fond moyenne est égale à la vitesse surface,
- en se limitant à quelques valeurs choisies lorsque le cap du navire et la route fond du navire sont égaux ou opposés ; le procédé de calcul de la vitesse surface est amélioré en se limitant à l'exploitation de données caractéristiques de la dynamique du navire comme des données correspondant aux instants où la vitesse fond est minimale, la vitesse fond maximale ou encore lorsque la vitesse dérive est nulle.

Dans un mode de réalisation, les paramètres de l'étape a) sont collectés par des moyens de télédétection externes audit navire, tels que des systèmes radar ou optique.

Dans un autre mode de réalisation, les paramètres de l'étape a) sont réceptionnés par des moyens récepteurs et émis par le navire à l'aide d'un moyen de télécommunication, tel que l'AIS, Iridium, Inmarsat ou Argos.

Ainsi le procédé peut s'appliquer à des navires qui disposent ou ne disposent pas de moyens de télécommunications pour transmettre les paramètres du navire. Le procédé permet également d'utiliser un moyen supplémentaire pour consolider les informations de position et de vitesse fond obtenues par AIS, Argos, Iridium ou Inmarsat. Ces informations télédétectées permettent d'appliquer le procédé sans être sur le navire.

Dans un mode de réalisation, l'étape d) est réalisée par un système non situé à bord du navire.

Dans un mode de réalisation, le calcul de l'étape e) de l'intensité et la direction du vecteur vitesse surface du navire s'effectue en sommant le vecteur dérive et le vecteur fond obtenues aux étapes c) et d).

Dans un mode de réalisation, ledit procédé comprend les étapes suivantes :
- obtenir une série de valeurs de la vitesse fond dudit navire à différents instants, valeurs calculées à partir d'au moins deux positions dudit navire,
- traiter la série de valeurs à différents instants obtenue à l'étape précédente à l'aide d'une technique de traitement du signal adaptée pour filtrer les composantes du signal dues au courant de surface ou au vent,
- calculer la valeur de la vitesse surface dudit navire en régime de croisière à partir du résultat du traitement de la série de valeurs.

Dans un autre mode de réalisation, la série de valeur de la vitesse fond du navire est constituée de valeurs correspondant à des instants où le vecteur surface du navire est colinéaire à son vecteur fond.

Selon ce mode de réalisation, lors du traitement de signal, le vecteur surface est colinéaire au vecteur fond. En se limitant à quelques valeurs choisies lorsque le cap du navire et la route fond du navire sont égaux ou opposés, le procédé de calcul de la vitesse surface est amélioré en se limitant à l'exploitation de données caractéristiques de la dynamique du navire, comme des données correspondant aux instants où la vitesse fond est minimale, la vitesse fond maximale ou encore lorsque la vitesse de dérive est nulle.

Dans un autre exemple de mode de réalisation, la colinéarité des vecteurs fonds et surface n'est pas stricte et les vecteurs fond et surface sont colinéaires lorsque leur axe diffère de moins de 5 degrés.

Dans un mode de réalisation, ledit procédé comprend une étape de représentation du vecteur dérive du navire ou de ses composantes liées au vent ou au courant en temps réel ou en temps différé dans un espace déterminé.

Le procédé permet l'affichage du courant ou du vent pour l'interprétation de l'information par l'utilisateur final. Le procédé permet également d'obtenir une haute résolution spatiale et temporelle des mesures, tout en étant en temps réel.

Selon un deuxième aspect, l'invention concerne également un procédé de calcul de chaque vecteur dérive en tout point de la trajectoire d'un navire évoluant au moteur en vitesse de croisière, il comprend les étapes suivantes :
aa)- mise en oeuvre du procédé de calcul de la vitesse surface d'un navire selon l'un des modes de réalisation ci-dessus,
bb)- obtenir en tout point de la trajectoire du navire des paramètres dont la position, le cap, la vitesse fond, la route fond,
cc)- calculer en tout point de la trajectoire du navire le vecteur dérive en sommant le vecteur surface dont la norme a été calculée à l'étape aa) et le vecteur fond calculé à partir des paramètres obtenus à l'étape bb).

Les avantages du procédé permettent :
- de mesurer des paramètres environnementaux tels que le vent ou le courant en chaque position dudit navire à l'aide de moyens externes audit navire, sans que ces paramètres ne soient mesurés directement par un instrument spécialisé embarqué à bord du navire ;
- de mesurer et collecter à terre ou à bord d'un autre navire des paramètres environnementaux tels que le vent ou le courant en chaque position dudit navire ;
- de mesurer et collecter des paramètres environnementaux tels que le vent ou le courant dans des zones situées hors de portée des moyens de télédétection côtiers tels que des moyens radar ou optique ;
- de mesurer et collecter des paramètres environnementaux tels que le vent ou le courant. Ces mesures étant plus précises que celles obtenues à l'aide de moyens de télédétection satellitaires radar ou optique.
- de mesurer et collecter des informations environnementales sur de vastes zones du fait des longs trajets effectués par de nombreux navires ;
- d'obtenir des mesures répétables, c'est-à-dire effectuées dans des zones géographiques identiques mais à des instants différents ;
- d'avoir un coût d'exploitation et de production faible du fait de la réexploitation d'infrastructures existantes et déployées pour d'autres besoins.

L'invention concerne également un produit de programme d'ordinateur comprenant une série d'instructions qui, lorsque chargée dans un ordinateur, entraîne l'exécution par ledit ordinateur des étapes du procédé.

### Brève description des figures

D'autres caractéristiques et avantages de l'invention apparaîtront à la lumière de la description qui suit, réalisée sur la base des dessins annexés. Ces exemples sont donnés à titre non limitatif. La description est à lire en relation avec les dessins annexés dans lesquels :
- la figure 1 représente une vue schématique des différents vecteurs à une position d'un navire sur sa trajectoire,
- la figure 2 représente un graphique de relevés de vitesse fond,
- la figure 3 représente les vecteurs courant mesurés à l'aide du procédé objet de la présente invention le long de la trajectoire d'un navire donné,
- la figure 4 représente une carte sur laquelle sont représentés les vecteurs courant de surface calculés à l'aide du procédé,
- la figure 5 représente un graphique comparant des résultats de vecteur courant mesurés à l'aide de radar HF, d'un modèle numérique, ou du procédé selon un exemple de réalisation,
- la figure 6 représente un graphique des vecteurs courant mesurés à l'aide du procédé pour un navire donné en tout point de sa trajectoire et en un lieu déterminé.
- la figure 7 représente, sous forme de logigramme, des étapes mises en oeuvre dans un mode de réalisation particulier du procédé objet de la présente invention,
- la figure 8 représente, sous forme de logigramme, des étapes mises en oeuvre dans un mode de réalisation particulier du procédé objet de la présente invention,
- la figure 9 représente, sous forme d'un schéma, une représentation des étapes de mesure du procédé dans un mode de réalisation particulier du procédé objet de la présente invention.

### Description de modes de réalisation de l'invention

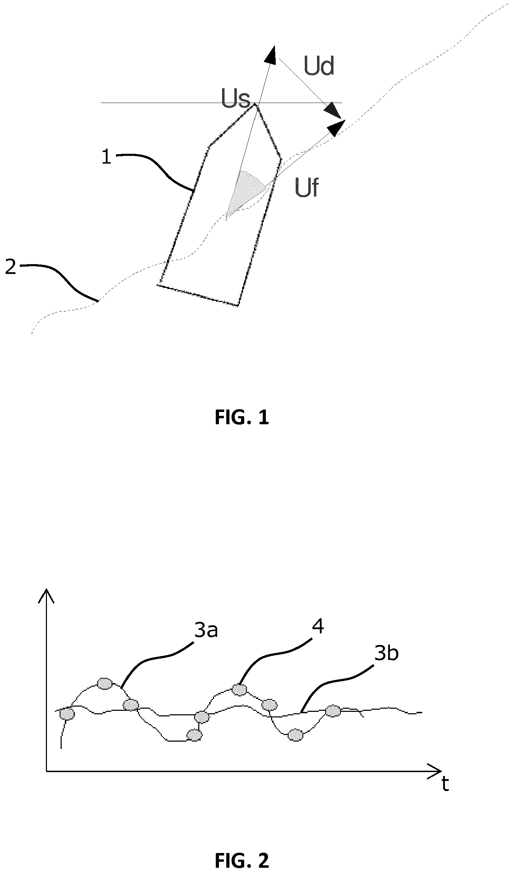

A la figure 1, il est montré un navire en régime de croisière, il subit les effets du vent et des courants marins : sa vitesse fond Uf (relative à un référentiel lié au fond) varie proportionnellement aux forces de courant et/ou du vent exercées sur l'ensemble du navire (coque et cargaison).

La relation entre le vecteur fond Uf d'un navire et le vecteur surface Us (relative à un référentiel lié à la surface de l'eau) fait intervenir le vecteur dérive Ud : Uf = Us + Ud.

L'intensité et la direction du vecteur dérive sont liées à la force du courant marin et à la force du vent qui s'appliquent sur le navire. C'est particulièrement le cas d'un navire à fort tirant d'air qui sera à la fois sensible aux forces exercées par le vent et le courant. Dans le cas d'un navire à faible tirant d'air pour lequel la force du vent peut être négligée, celui-ci ne subira que la force exercée par le courant. Le vecteur dérive sera alors confondu avec le vecteur courant.

Le procédé consiste à utiliser les informations de dérive d'un navire en régime de croisière pour obtenir le courant et/ou le vent (par exemple en tout point de sa trajectoire) dans un espace déterminé.

Le procédé cherche d'abord à caractériser les différents vecteurs dérive, fond et surface.

A une position donnée le long de sa trajectoire 2, le navire 1 a une vitesse fond notée Uf. Lorsque le navire 1 est en régime de croisière, dans l'étape a) du procédé, il est nécessaire d'obtenir des paramètres dont la position, le cap, la vitesse fond, la route fond à partir de données accessibles dans des bases de données ou en temps réel. Dans l'étape b) du procédé, il est nécessaire d'obtenir par des moyens externes audit navire 1 au moins un paramètre sélectionné parmi le vent et le courant à proximité dudit navire 1 à partir de données accessibles dans des bases de données ou en temps réel. L'étape b) récupère des informations environnementales. Par exemple, le procédé récupère le courant marin et/ou le vent à cette position ou à une position proche. Il est possible de récupérer ces informations en appliquant le procédé à un navire proche. Il est également possible de récupérer une série d'informations comme la position, le cap, la vitesse fond et la route fond du navire 1. Les informations vitesse fond et route fond peuvent aussi être calculées à partir d'au moins deux positions de navire proches. Il est possible de récupérer toutes ces informations à partir d'un flux de données temps-réel ou à partir d'une base de données.

Ensuite dans une étape c), ces informations servent à définir le vecteur dérive Ud à partir du courant et/ou du vent à la position du navire. En fonction du vent et/ou du courant, il est possible de définir le vecteur dérive lié au navire. Par exemple, dans le cas d'un navire à faible tirant d'air, le courant est l'unique dérive que va subir le navire. Alors que dans le cas d'un navire à fort tirant d'air (exemple : un porte-conteneur), le vecteur courant (norme et direction) et le vecteur vent (norme et direction) servent à définir le vecteur dérive Ud à une position du navire.

Après avoir obtenu le vecteur dérive, il est possible de l'afficher sur une carte marine.

Ensuite dans une étape d), ces informations servent à définir le vecteur fond Uf.

L'étape e) sert à calculer le vecteur Us du navire. En effet, par somme vectorielle de la relation Uf - Ud, on obtient le vecteur Us.

Après avoir obtenu le vecteur Us, il est possible de l'afficher sur une carte marine.

Une autre manière de procéder pour le calcul du vecteur surface Us est montrée à la figure 2. Sur cette figure, plusieurs données ont été récupérées. L'ordonnée de cette figure correspond à la norme du vecteur fond, notée Nf, et l'abscisse correspond au temps, notée t. Le tracé des valeurs de Nf, noté 3a, représente l'ensemble des valeurs de Nf pendant plusieurs cycles de marée. La courbe a une pseudo-période correspondant à l'oscillation de la marée dans le cas où le navire navigue dans une zone influencée par les courants de marées. La courbe 3b représente les valeurs Nf issues des mêmes valeurs Nf mais après l'application d'un filtrage de l'onde de marée.

Pour filtrer l'onde de marée, il est possible d'utiliser une méthode classique de traitement de signal en appliquant par exemple un filtre de Démerliac aux données collectées. Ce filtrage a pour effet de supprimer l'influence du courant de marée sur le jeu de données. En effet, c'est le courant dominant dans de nombreuses zones du globe, comme par exemple en Manche.

Les cercles 4 représentent les instants où les vecteurs fond et les vecteurs surface sont colinéaires.

La moyenne ou la médiane de plusieurs valeurs de la norme Nf est une approximation de l'intensité de la vitesse de surface. On améliore la précision de l'approximation de Ns à partir des valeurs de Nf en augmentant le nombre de valeurs de Nf entrant dans le calcul de la moyenne ou de la médiane ou bien en sélectionnant des données issues de positions choisies lorsque les vecteurs fond et surface sont colinéaires. A ces instants, le vecteur dérive est, soit nul, soit opposé au sens de déplacement du navire, soit dans le même sens que le sens de déplacement du navire. Par cette méthode, on obtient donc la norme du vecteur surface Us.

Le procédé permet de représenter chaque vecteur dérive et ses composantes dues au vent ou au courant sur une carte marine en tout point de la trajectoire d'un navire.

Le fait d'avoir calculé le vecteur surface en régime de croisière pour chaque navire, permet de calculer le vecteur dérive pour chaque position des navires. En effet, en connaissant le vecteur surface Us en régime de croisière et le vecteur fond Uf, il est possible de calculer, à l'aide de la relation Us = Uf+Ud, tous les vecteurs dérive à chaque position du navire. Il est alors possible d'avoir une image des vecteurs dérive en temps réel et en temps différé.

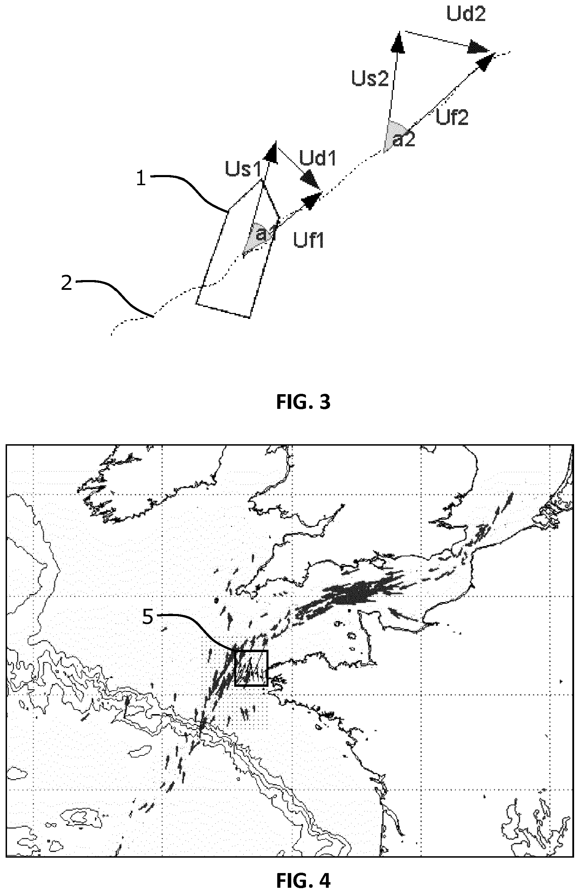

La figure 3 représente le procédé de déduction des vecteurs dérive, surface et fond dans un espace déterminé pour une autre position du navire.

Le procédé de déduction comprend la collecte et la lecture d'informations relatives aux paramètres de la position, du cap, et de la route fond d'un navire évoluant en vitesse de croisière à différents instants déterminés.

Le procédé de déduction comprend également la mise en oeuvre du procédé de calcul de paramètres vue précédemment pour chaque position collectée du navire 1, de manière à obtenir l'intensité et la direction de chaque vecteur dérive en tout point de la trajectoire d'un navire.

Sur le navire 1 sont positionnés le vecteur fond Uf1, le vecteur surface Us1 et le vecteur dérive Ud1. L'angle formé par le vecteur surface Us1 et le vecteur fond Uf1 est noté al. En appliquant le procédé et la relation Uf = Us+Ud, il est possible d'obtenir, à n'importe quelle position du navire, le vecteur dérive.

Sur cette figure 3 et pour une autre position du navire 1, il a été représenté le vecteur fond Uf2, le vecteur surface Us2 et le vecteur dérive Ud2. L'angle formé par le vecteur surface Us2 et le vecteur fond Uf2 est noté a2.

La figure 4 représente des résultats obtenus à l'aide du procédé objet de la présente invention. Il est représenté des vecteurs courant en Manche et en Atlantique à la position de nombreux navires en exploitant des paramètres de navires collectés à l'aide de trois récepteurs AIS installés sur la côte (un vecteur par navire). Sur cette figure, il est comparé des mesures réalisées à l'aide de deux radars HF (zone située à l'intérieur du cadre noir 5) et des résultats du procédé mis en oeuvre selon un exemple de réalisation permettant de mesurer le courant sur de vastes zones géographiques. Cette figure montre bien que le procédé permet d'être utilisé à coûts réduits sans exploiter de capteurs de mesure de vent ou de courant embarqués à bord des navires

La figure 4 illustre de manière remarquable le gain obtenu en terme de superficie de zone de mesure grâce au procédé au regard de ce qui se fait classiquement à l'aide de radars HF. Les vecteurs représentés dans le cadre 5 situé au centre de la carte ont été mesurés à l'aide de deux radars HF. Il sont alignés avec les vecteurs situés à l'extérieur du cadre 5 et peu éloignés de la zone qu'il délimite. Tous les autres vecteurs situés en Manche et en Atlantique ont été calculés à l'aide du procédé décrit ci-avant en utilisant des paramètres de navigation de navires collectés à l'aide de 3 récepteurs AIS.

Contrairement aux idées reçues dans les domaines de la navigation et de la mesure de paramètres météo-océaniques, les procédés de calcul de la vitesse surface d'au moins un navire et de déduction de chaque vecteur dérive en tout point de la trajectoire dudit navire décrits ci-avant, remarquable en ce qu'ils utilisent des moyens de mesures de paramètres environnementaux externe audit navire et des paramètres de navigation acquis lorsque ledit navire navigue au moteur en régime de croisière, fournissent des résultats d'une grande précision, au moins comparables à la précision des mesures obtenues à l'aide des systèmes onéreux les plus couramment utilisés (radar HF, altimétrie spatiale pour ce qui concerne la mesure de courant par exemple).

Dans le domaine de la mesure de paramètres environnementaux tels que le vent et le courant, la surprenante qualité des mesures obtenues à l'aide du procédé objet de la présente invention permet d'envisager son application sur de très vastes zones géographiques, à un coup exceptionnellement faible.

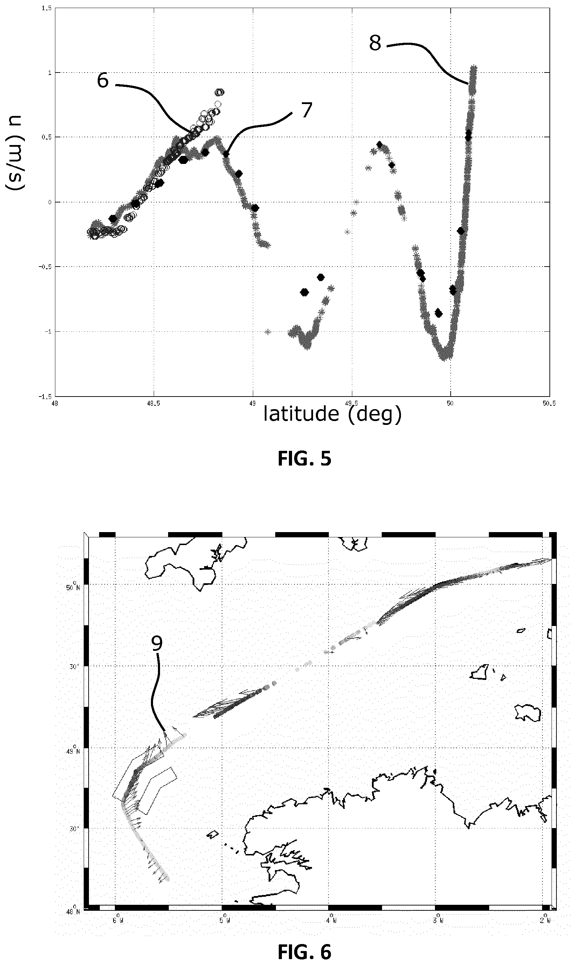

La figure 5 représente un graphique montrant la composante ouest-est du vecteur courant mesuré à chaque position d'un navire donné en fonction de la latitude. Cette figure 5 illustre le caractère hautement qualitatif des mesures de courant obtenues à l'aide du procédé objet de la présente invention.

Le graphique compare plusieurs résultats entre :
- les résultats de mesures réalisées à l'aide de deux radars HF à la position d'un navire donné (représentés sous forme de cercles 6) : la courbe représentée est croissante et de faible longueur, illustrant ainsi les limites en terme de couverture spatiale de mesures effectuées par radar HF au regard de mesures réalisées à l'aide du procédé objet de la présente invention.
- les résultats obtenus à l'aide d'un modèle numérique à la position du navire (représentés par des losanges, 7); cette courbe sinusoïdale permet de mettre en évidence les variations du courant de surface en Manche liées au signal de marée. Cette courbe ne présente pas un résultat de mesure et ne fournit donc qu'une estimation du courant réel.
- les résultats obtenus à l'aide du procédé objet de la présente invention (représentés par des astérisques, 8). Cette courbe est également sinusoïdale et évolue de la même manière que la courbe présentant des résultats obtenus à l'aide d'un modèle numérique.

Cette figure permet de mettre en évidence que le procédé objet de la présente invention rend compte des variations de courant dues à la marée, et ce de manière plus précise que le radar HF. En effet, la courbe constituée de cercles s'éloigne de la courbe constituée de losange à son extrémité droite, contrairement à la courbe constituée d'astérisque.

La figure 6 illustre des vecteurs courant 9 mesurés à l'aide du procédé objet de la présente invention en tout point de la trajectoire d'un navire donné dans un espace déterminé..

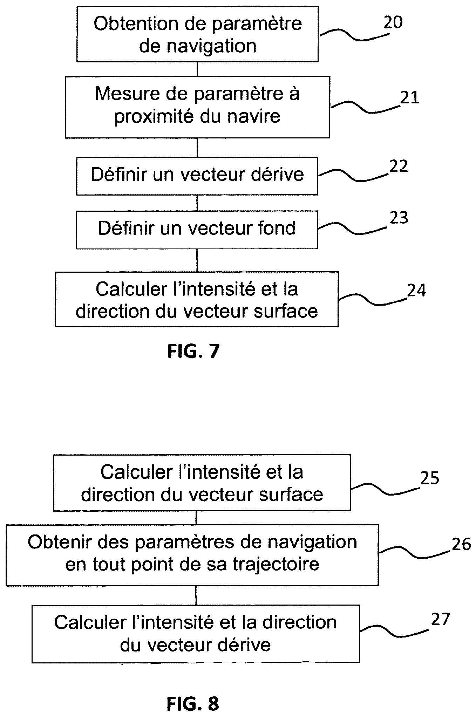

La figure 7 représente le procédé de calcul du vecteur surface d'au moins un navire objet de la présente invention et comporte :
- une étape 20 d'obtention de paramètre de navigation ;
- une étape 21 de mesure de paramètre à proximité du navire ;
- une étape 22 de définition d'un vecteur dérive ;
- une étape 23 définition d'un vecteur fond ;
- une étape 24 de calcul de l'intensité et de la direction du vecteur surface ;

Au cours de l'étape 20, des paramètres de navigation sont collectés en temps réel ou en temps différé.

Au cours de l'étape 21 des mesures de vent et/ou de courant (direction et intensité) sont effectuées à proximité du navire ; ces mesures sont soit effectuées à l'aide d'un moyen de télédétection permettant d'effectuer les mesures sans utiliser de capteur embarqué à bord du navire, soit effectuées à l'aide de moyens de mesure situés à proximité du navire (mais non embarqués) et télétransmis vers un centre à terre où vers un autre navire à l'aide d'un moyen de télécommunication tel que l'AIS ou Argos par exemple.

Au cours de l'étape 22, le vecteur dérive est calculé en utilisant les mesures de courant et/ou de vent obtenues à l'étape 21.

Au cours de l'étape 23, le vecteur fond est calculé à l'aide des paramètres de navigation obtenus à l'étape 20

Au cours de l'étape 24, le vecteur surface est calculé en utilisant les résultats des étapes 22 et 23 ; le vecteur surface est obtenu en sommant le vecteur fond et le vecteur dérive.

La figure 8 représente le procédé de déduction de chaque vecteur dérive en tout point de la trajectoire dudit navire objet de la présente invention et comporte :
- une étape 25 de calcul de la vitesse surface du navire
- une étape 26 d'obtention de paramètre de navigation du navire;
- une étape 27 de calcul du vecteur dérive ;

Au cours de l'étape 25 la vitesse surface du navire est calculée à un instant donné à l'aide du procédé décrit sur la figure 7.

Au cours de l'étape 26 des paramètres de navigation du navire sont collectés en temps réel ou en temps différé à tout instant et en tout point de la trajectoire du navire dans un espace déterminé. Ces paramètres permettent de calculer la vitesse fond.

Au cours de l'étape 27 le vecteur fond et le vecteur surface sont sommés pour calculer le vecteur dérive en tout point de la trajectoire. La norme du vecteur surface utilisée à cette étape est celle obtenue à l'étape 25.

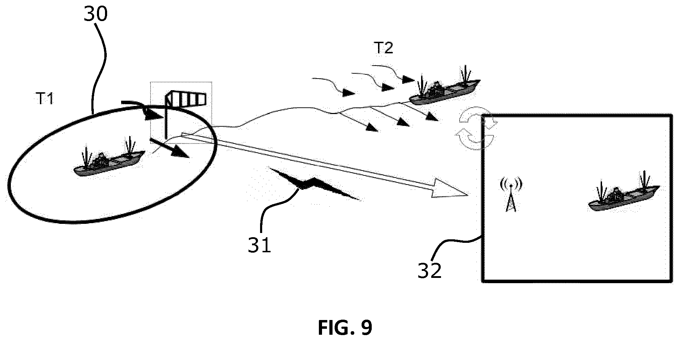

La figure 9 présente le fonctionnement général du procédé :
- une étape de mesure de courant et de vent dans une zone 30 à proximité du navire à un instant T1, sans utiliser de capteur embarqué à bord du navire ; ces mesures peuvent être transmises en temps-réel ou en temps différé vers un centre à terre ou vers un autre navire que celui auquel on applique le procédé, disposant de capacités de télécommunication et de traitement, et éventuellement de télédétection, voir cadre noir 32,
- une étape de calcul de la vitesse surface du navire à un instant T1 en utilisant les paramètres de navigation dudit navire et les mesures 31 de courant et de vent obtenues à T1.
- une étape de calcul du courant et du vent à un instant T2 lorsque le navire n'est plus dans la zone de proximité où ont été effectuées les mesures de courant et de vent; le calcul est effectué en sommant le vecteur surface calculé à T1 et la vitesse fond obtenue à T2 par le centre à terre ou l'autre navire.

## Revendications

1. Procédé de calcul du vecteur surface d'au moins un navire (1) et calcul de chaque vecteur dérive en tout point de la trajectoire dudit navire (1) évoluant au moteur en régime de croisière, comprenant les étapes aa) à cc) suivantes:
- aa) mise en oeuvre du procédé de calcul de la vitesse surface dudit navire (1) selon les étapes a) à e) suivantes effectuées en une position déterminée dudit navire (1):
- a) obtenir des paramètres dudit navire (1) dont la position, le cap, la vitesse fond, la route fond ;
- b) obtenir des mesures sélectionnées parmi le vent et le courant, à l'aide de moyens externes audit navire (1), lesdites mesures étant effectuées à proximité dudit navire (1), ladite proximité étant spatiale et temporelle, la proximité spatiale étant une zone centrée sur la position dudit navire et la proximité temporelle étant un intervalle de temps ;
- c) définir le vecteur dérive à partir d'une ou des mesures obtenues à l'étape b) sélectionnées parmi le vent et le courant ;
- d) définir le vecteur fond à partir des paramètres sélectionnés parmi la position, la vitesse fond et la route fond obtenus à l'étape a) ;
- e) calculer la norme et la direction du vecteur surface du navire (1) à partir du vecteur dérive de l'étape c) et du vecteur fond de l'étape d);
- bb) obtenir les paramètres de navigation du navire (1) dont la position, le cap, la vitesse fond, la route fond, collectés en temps réel ou en temps différé à tout instant et en tout point de la trajectoire du navire (1) dans un espace déterminé pour calculer la vitesse fond ;
- cc) calculer en tout point de la trajectoire du navire (1) le vecteur dérive en sommant le vecteur surface dont la norme a été calculée à l'étape aa) et dont la direction est donnée par le cap du navire, et le vecteur fond calculé à partir des paramètres obtenus à l'étape bb).

2. Procédé selon la revendication 1, caractérisé en ce les paramètres de l'étape a) ou les mesures de l'étape b) sont acquises en temps réel.

3. Procédé selon la revendication 1, **caractérisé en ce que** les paramètres de l'étape a) ou les mesures de l'étape b) sont acquises en temps différé.

4. Procédé selon l'une des revendications 2 ou 3, **caractérisé en ce que** l'obtention des paramètres de l'étape a), s'effectue pendant un intervalle de temps d'au moins deux secondes.

5. Procédé selon l'une des revendications 1 à 4, **caractérisé en ce que** les paramètres de l'étape a) sont collectés par des moyens de télédétection externes audit navire.

6. Procédé selon l'une des revendications 1 à 4, **caractérisé en ce que** les paramètres de l'étape a) sont réceptionnés par des moyens récepteurs et émis par le navire (1) à l'aide d'un moyen de télécommunication.

7. Procédé selon l'une des revendications 1 à 6, **caractérisé en ce que** l'étape d) est réalisée par un système non situé à bord du navire (1).

8. Procédé selon l'une des revendications 1 à 7, **caractérisé en ce que** le calcul de l'étape e) de l'intensité et la direction du vecteur vitesse surface du navire (1) s'effectue en sommant le vecteur dérive et le vecteur fond obtenues aux étapes c) et d),

9. Procédé de calcul du vecteur surface d'au moins un navire (1) et calcul de chaque vecteur dérive en tout point de la trajectoire dudit navire (1) évoluant au moteur en régime de croisière, comprenant les étapes aa) à cc) suivantes:
- aa) mise en oeuvre du procédé de calcul de la vitesse surface dudit navire (1) selon les étapes a) à c) suivantes effectuées en une position déterminée dudit navire (1) :
- a) obtenir une série de valeurs de la vitesse fond dudit navire (1) à différents instants, valeurs calculées à partir d'au moins deux positions dudit navire (1),
- b) traiter la série de valeurs à différents instants obtenue à l'étape précédente à l'aide d'une technique de traitement du signal adaptée pour filtrer les composantes du signal dues au courant de surface ou au vent,
- c) calculer la norme du vecteur surface dudit navire (1) en régime de croisière à partir du résultat du traitement de la série de valeurs ;
- bb) obtenir les paramètres de navigation du navire (1) dont la position, le cap, la vitesse fond, la route fond, collectés en temps réel ou en temps différé à tout instant et en tout point de la trajectoire du navire (1) dans un espace déterminé pour calculer la vitesse fond;
- cc) calculer en tout point de la trajectoire du navire (1) le vecteur dérive en sommant le vecteur surface dont la norme a été calculée à l'étape aa) et dont la direction est donnée par le cap du navire, et le vecteur fond calculé à partir des paramètres obtenus à l'étape bb).

10. Procédé selon la revendication 9, **caractérisé en ce que** la série de valeur de la vitesse fond du navire (1) est constituée de valeurs correspondant à des instants où le vecteur surface du navire (1) est colinéaire à son vecteur fond.

11. Procédé selon l'une des revendications 1 à 10, **caractérisé en ce que** ledit procédé comprend une étape de représentation du vecteur dérive du navire (1) ou de ses composantes liées au vent ou au courant en temps réel ou en temps différé dans un espace déterminé.

12. Produit de programme d'ordinateur comprenant une série d'instructions, qui lorsque chargée dans un ordinateur, entraîne l'exécution par ledit ordinateur des étapes du procédé selon l'une des revendications 1 à 11.

## Patentansprüche

1. Verfahren zum Berechnen des Überwasser-Vektors mindestens eines Schiffes (1) und Berechnen jedes Abdrift-Vektors an jedem Punkt der Bahn des Schiffes (1), das sich mit Motor bei voller Fahrt fortbewegt, die folgenden Schritte aa) bis cc) umfassend:
- aa) Anwenden des Verfahrens zum Berechnen der Überwassergeschwindigkeit des Schiffes (1) entsprechend den folgenden Schritten a) bis e), die in einer bestimmten Position des Schiffes (1) ausgeführt werden:
- a) Erhalten von Parametern des Schiffes (1), darunter die Position, den Kurs, die Fahrt über Grund, den Weg über Grund;
- b) Erhalten von ausgewählten Messungen aus dem Wind und der Strömung, mithilfe von Mitteln außerhalb des Schiffes (1), wobei die Messungen in der Nähe des Schiffes (1) durchgeführt werden, wobei die Nähe räumlich und zeitlich ist, wobei die räumliche Nähe eine zentrierte Zone auf der Position des Schiffes und die zeitliche Nähe ein Zeitintervall ist;
- c) Definieren des Abdrift-Vektors ausgehend von einer oder den in Schritt b) erhaltenen Messungen, die aus dem Wind und der Strömung ausgewählt werden;
- d) Definieren des Vektors über Grund ausgehend von den ausgewählten Parametern, aus der Position, der Fahrt über Grund, und dem Weg über Grund, die in Schritt a) erhalten wurden;
- e) Berechnen der Norm und der Richtung des Überwasser-Vektors des Schiffes (1) ausgehend von dem Abdrift-Vektor des Schrittes c) und dem Vektor über Grund des Schrittes d);
- bb) Erhalten der Navigationsparameter des Schiffes (1), darunter die Position, den Kurs, die Fahrt über Grund, den Weg über Grund, die in Echtzeit oder versetzter Zeit zu jedem Zeitpunkt und an jedem Punkt der Bahn des Schiffes (1) in einem bestimmten Raum gesammelt werden, um die Fahrt über Grund zu berechnen;
- cc) Berechnen an jedem Punkt der Bahn des Schiffes (1) des Abdrift-Vektors durch Summieren des Überwasser-Vektors, dessen Norm in Schritt aa) berechnet worden ist, und dessen Richtung durch den Kurs des Schiffes gegeben ist, und des Vektors über Grund, der ausgehend von den in Schritt bb) erhaltenen Parametern berechnet wird.

2. Verfahren nach Anspruch 1, **dadurch gekennzeichnet, dass** die Parameter des Schrittes a) oder die Messungen des Schrittes b) in Echtzeit erfasst werden.

3. Verfahren nach Anspruch 1, **dadurch gekennzeichnet, dass** die Parameter des Schrittes a) oder die Messungen des Schrittes b) in versetzter Zeit erfasst werden.

4. Verfahren nach einem der Ansprüche 2 oder 3, **dadurch gekennzeichnet, dass** der Erhalt der Parameter des Schrittes a) während eines Zeitintervalls von mindestens zwei Sekunden erfolgt.

5. Verfahren nach einem der Ansprüche 1 bis 4, **dadurch gekennzeichnet, dass** die Parameter des Schrittes a) durch Ferndetektionsmittel außerhalb des Schiffes gesammelt werden.

6. Verfahren nach einem der Ansprüche 1 bis 4, **dadurch gekennzeichnet, dass** die Parameter des Schrittes a) durch Empfangsmittel empfangen werden und durch das Schiff (1) mithilfe eines Telekommunikationsmittels gesendet werden.

7. Verfahren nach einem der Ansprüche 1 bis 6, **dadurch gekennzeichnet, dass** der Schritt d) durch ein System durchgeführt wird, das sich nicht an Bord des Schiffes (1) befindet.

8. Verfahren nach einem der Ansprüche 1 bis 7, **dadurch gekennzeichnet, dass** die Berechnung des Schrittes e) der Intensität und der Richtung des Überwassergeschwindigkeits-Vektors des Schiffes (1) durch Summieren des Abdrift-Vektors und des Vektors über Grund, durchgeführt wird, die in den Schritten c) und d) erhalten werden.

9. Verfahren zum Berechnen des Überwasser-Vektors mindestens eines Schiffes (1) und Berechnen jedes Abdrift-Vektors an jedem Punkt der Bahn des Schiffes (1), das sich mit Motor bei voller Fahrt fortbewegt, die folgenden Schritte aa) bis cc) umfassend:
- aa) Anwenden des Verfahrens zum Berechnen der Überwassergeschwindigkeit des Schiffes (1) entsprechend den folgenden Schritten a) bis c), die in einer bestimmten Position des Schiffes (1) ausgeführt werden:
- a) Erhalten einer Reihe von Werten der Fahrt über Grund des Schiffes (1) zu verschiedenen Zeitpunkten, wobei die Werte ausgehend von mindestens zwei Positionen des Schiffes (1) berechnet werden,
- b) Bearbeiten der Reihe von Werten zu verschiedenen Zeitpunkten, die in dem vorstehenden Schritt erhalten wurde, mithilfe einer Signalbearbeitungstechnik, die angepasst ist, um die Komponenten des Signals zu filtern, die der Überwasserströmung oder dem Wind geschuldet sind,
- c) Berechnen der Norm des Überwasser-Vektors des Schiffes (1) bei voller Fahrt ausgehend von dem Ergebnis der Bearbeitung der Reihe von Werten;
- bb) Erhalten der Navigationsparameter des Schiffes (1), darunter die Position, den Kurs, die Fahrt über Grund, den Weg über Grund, die in Echtzeit oder versetzter Zeit zu jedem Zeitpunkt und an jedem Punkt der Bahn des Schiffes (1) in einem bestimmten Raum gesammelt werden, um die Fahrt über Grund zu berechnen;
- cc) Berechnen an jedem Punkt der Bahn des Schiffes (1) des Abdrift-Vektors durch Summieren des Überwasser-Vektors, dessen Norm in Schritt aa) berechnet worden ist, und dessen Richtung durch den Kurs des Schiffes gegeben ist und des Vektors über Grund, der ausgehend von den in Schritt bb) erhaltenen Parametern berechnet wird.

10. Verfahren nach Anspruch 9, **dadurch gekennzeichnet, dass** die Wertreihe der Fahrt über Grund des Schiffes (1) aus Werten gebildet wird, die den Zeitpunkten entsprechen, an denen der Überwasser-Vektor des Schiffes (1) kollinear mit seinem Vektor über Grund ist.

11. Verfahren nach einem der Ansprüche 1 bis 10, **dadurch gekennzeichnet, dass** das Verfahren einen Repräsentationsschritt des Abdrift-Vektors des Schiffes (1) oder seiner Komponenten im Zusammenhang mit dem Wind oder der Strömung in Echtzeit oder versetzter Zeit in einem bestimmten Raum umfasst.

12. Computerprogrammprodukt, eine Reihe von Befehlen umfassend, die, wenn sie in einen Computer geladen wird, für die Ausführung der Schritte des Verfahrens nach einem der Ansprüche 1 bis 11 durch den Computer sorgt.

## Claims

1. Method for calculating the surface vector of at least one ship (1) and calculating each drift vector at any point on the path of said ship (1) travelling at the engine cruising speed, comprising the following steps aa) to cc):
- aa) implementing the method for calculating the surface speed of said ship (1) according to the following steps a) to e) performed in a given position of said ship (1):
- a) obtaining parameters of said ship (1), including the position, the heading, the background speed and the background route;
- b) obtaining measurements selected from wind and current, using means external to said ship (1), said measurements being made in the vicinity of said ship (1), said vicinity being spatial and temporal, the spatial vicinity being an area centred on the position of said ship and the temporal vicinity being an interval of time;
- c) defining the drift vector from one or more measurements obtained at step b) selected from wind and current;
- d) defining the background vector from parameters selected from the position, the background speed and the background route obtained at step a);
- e) calculating the norm and the direction of the surface vector of the ship (1) from the drift vector at step c) and the background vector of said d);
- bb) obtaining the navigation parameters of the ship (1), including the position, the heading, the background speed and the background route, collected in real time or in deferred time at any instant and at any point on the path of the ship (1) in a given space for calculating the background speed;
- cc) calculating, at any point on the path of the ship (1), the drift vector by adding the surface vector, the norm of which was calculated at step aa) and the direction of which is given by the heading of the ship, and the background vector calculated from the parameters obtained at step bb).

2. Method according to claim 1, **characterised in that** the parameters of step a) or the measurements of step b) are acquired in real time.

3. Method according to claim 1, **characterised in that** the parameters of step a) or the measurements of step b) are acquired in deferred time.

4. Method according to either claim 2 or claim 3, **characterised in that** the parameters of step a) are obtained over an interval of time of at least two seconds.

5. Method according to any of claims 1 to 4, **characterised in that** the parameters of step a) are collected by teledetection means external to said ship.

6. Method according to any of claims 1 to 4, **characterised in that** the parameters of step a) are received by receiving means and sent by the ship (1) using a telecommunication means.

7. Method according to any of claims 1 to 6, **characterised in that** step d) is performed by a system not situated on board the ship (1).

8. Method according to any of claims 1 to 7, **characterised in that** the calculation of step e) of the intensity and the direction of the surface speed vector of the ship (1) is done by adding the drift vector and the background vector obtained at steps c) and d).

9. Method for calculating the surface vector of at least one ship (1) and calculating each drift vector at any point on the path of said ship (1) travelling at the engine cruising speed, comprising the following steps aa) to cc):
- aa) implementing the method for calculating the surface speed of said ship (1) according to the following steps a) to c) performed at a given position of said ship (1):
- a) obtaining a series of values of the background speed of said ship (1) at various instants, values calculated from at least two positions of said ship (1),
- b) processing the series of values at various instants obtained at the previous step using a technique for processing the signal suitable for filtering the components of the signal due to the surface current or to the wind,
- c) calculating the norm of the surface vector of said ship (1) at cruising speed from the result of the processing of the series of values;
- bb) obtaining the navigation parameters of the ship (1) including the position, the heading, the background speed and the background route, collected in real time or in deferred time at any instant and at any point on the path of the ship (1) in a given space for calculating the background speed;
- cc) calculating, at any point on the path of the ship (1), the drift vector by adding the surface vector, the norm of which was calculated at step aa) and the direction of which is given by the heading of the ship, and the background vector calculated from the parameters obtained at step bb).

10. Method according to claim 9, **characterised in that** the series of values of the background speed of the ship (1) consists of values corresponding to instant when the surface vector of the ship (1) is colinear with its background vector.

11. Method according to any of claims 1 to 10, **characterised in that** said method comprises a step of representation of the drift vector of the ship (1) or of its components related to the wind or to the current in real time or in deferred time in a given space.

12. Computer program product comprising a series of instructions which, when loaded into a computer, causes the execution by said computer of the steps of the method according to any of claims 1 to 11.
